# EUROPEAN PATENT APPLICATION

(11) **EP 2 224 329 A2**
(43) Date of publication of application: **01.09.2010**
(21) Application number: 10154841.0
(22) Date of filing: 26.02.2010
(51) Int. Cl.: G06F 3/12

(54) **Information processing apparatus, control method, and program**

(30) Priority: 27.02.2009 JP 2009047019
(71) Applicant: Canon Kabushiki Kaisha, Tokyo 146-8501 (JP)
(72) Inventor: Sugiyama, Hideki, Ohta-ku Tokyo (JP)
(74) Representative: Garner, Jonathan Charles Stapleton

(57) **Abstract**

An information processing apparatus includes a spooler (503) for spooling jobs received from an application, a spooler monitor, an archive means (507) for archiving a job; and a port monitor (504); the port monitor (504) being configured to: detect if the spooler starts a job, in a case that the port monitor detects that the spooler starts a job, request control parameters from the spooler monitor and archive means; and in a case that a control parameter received from the archive means indicates that the job is to be archived, and a control parameter received from the spooler monitor indicates that another operation is to be performed on the job, cause the archive means to archive the job and cause performance of the other operation.

## Description

### BACKGROUND OF THE INVENTION

### Field of the Invention

The present invention relates to an information processing apparatus, control method, and program. Particularly, the present invention relates to save of job data of a spooled job.

### Description of the Related Art

These days, copying apparatuses and printing apparatuses have prevailed in the offices of companies and the like, and allow anyone to copy and print easily. This situation causes problems such as security problems typified by leakage of printed materials of in-house documents, wasteful printing, and printed material left after output by an unknown user. To solve these problems, a printing history management system has been proposed to aggregate a printed document name, printing date & time, the number of sheets, the number of copies, color/monochrome printing, and the like in each print processing for each user.

The printing history management system associates management information (e.g., customer information and the unit cost of printing) with a job and aggregates it as part of a printing log (history).
If the aggregation result reveals that the number of prints exceeds the upper limit of printing set for each user or group, a job is deleted. A system capable of such advanced job control is available. For example, Japanese Patent Laid-Open No. 11-205498 discloses a system for aggregating the number of output sheets from an image processing apparatus for each user. In this system, a multi-function peripheral, print server, client PC (Personal Computer), and management apparatus are connected to a network. The multi-function peripheral manages the number of output sheets for each user when he uses the copy function of the multi-function peripheral. The print server manages the number of output sheets for each user when he uses the printer function of the copying apparatus.

The printing history management system implements a job control system which analyzes a rendering instruction and print attribute (to be generally referred to as "print data") contained in a print job (which is a data stream including a command to designate printing, a rendering instruction, a print attribute, and attachment information such as the execution time: to be also abbreviated as a "job").
The job control system deletes a job such as a color print job, and restricts a job to, for example, forcibly perform double-sided printing. As a method of aggregating a printing log, Japanese Patent Laid-Open No. 2002-268966 discloses a method of creating a printing log (history) by a printing apparatus, periodically issuing a printing apparatus-specific command from an aggregation server, and acquiring a printing log at that time. This reference also discloses a method of notifying an aggregation server of the printing log of a printing apparatus by the printing apparatus.

Japanese Patent Laid-Open No. 2000-112706 discloses a method of creating a printing log based on a print attribute by an information processing apparatus (client PC) which has designated printing, and notifying an aggregation server of it.

A job archive system archives PDL (Page Description Language) data of a job, data obtained by bitmapping PDL data into a print image, or intermediate data positioned between PDL data and bitmap data (these data will be generally called archive data). If information leaks, the job archive system quickly specifies the path of the leak. Notifying a user to save print data and print images enhances his awareness of information management and prevents illicit printing. Japanese Patent Laid-Open No. 2002-14937 discloses a method of receiving print data by a print server, generating bitmap data from the print data, and saving it as a printing log.

### SUMMARY OF THE INVENTION

The above-described printing history system and job archive system can be applied as separate systems to a printing control system without any problem. However, when these two systems are simply applied to one printing control system simultaneously, they may cause an error. For example, when a job is deleted or suspended, the job data may not be archived depending on the execution timings of the printing history system and job archive system.

Print data is saved by creating a file and copying the print data to the file. In general, a larger file size requires a longer copy time. For example, when a port monitor has a print data copy function and performs copy processing and save processing in sending print data, the sending of print data cannot be completed till the end of copying the print data, which may decrease the print processing speed.

The present invention has been made to overcome the conventional drawbacks, and provides a system which holds job data without the influence of a changed processing order or the like upon deleting or suspending a job, and does not decrease the printing speed when different printing control apparatuses simultaneously request a plurality of print processes of a single printing apparatus.

The present invention in its first aspect provides an apparatus as specified in claims 1 to 7.

The present invention in its second aspect provides a method as specified in claim 8.

The present invention in its third aspect provides a program as specified in claim 9.

With this arrangement, print data can be saved even when a client computer deletes a job and a printing apparatus does not print.

When suspending sending of a job, print data can be saved without waiting for the sending of the job. When printing is executed after suspending the job, the job need not be archived again, improving user friendliness. After resuming the sending of the job, the job can be sent without decreasing the job sending speed.

If the attribute of print data of a job archived in advance is changed, the attribute-changed job can be saved. A job with finally printed data can be archived.

Accordingly, the present invention can provide a system which does not limit the specifications of a printing control apparatus, holds data without leaking the held data, and does not decrease the printing speed even if a plurality of printing control apparatuses with different processing purposes run simultaneously and request print processes of a single printing apparatus.

Further features of the present invention will become apparent from the following description of exemplary embodiments (with reference to the attached drawings) .

### BRIEF DESCRIPTION OF THE DRAWINGS

Fig. 1 is a view exemplifying the configuration of a printing system according to an embodiment of the present invention;

Fig. 2 is a block diagram exemplifying the detailed configuration of the printing system according to the embodiment of the present invention;

Fig. 3 is a view exemplifying display of management information of a printing apparatus according to the embodiment of the present invention;

Fig. 4 is a view exemplifying modules running on a client computer which configures a printing history management system, and the flow of a job according to the embodiment;

Fig. 5 is a view exemplifying modules running on a client computer which configures a job archive system, and the flow of a job according to the embodiment;

Fig. 6 is a chart exemplifying a job deletion sequence in the printing history management system;

Fig. 7 is a chart exemplifying a job suspension sequence in the printing history management system;

Fig. 8 is a chart exemplifying a job archive sequence in the job archive system;

Fig. 9 is a flowchart exemplifying the basic operation of a port monitor according to the embodiment;

Fig. 10 is a flowchart exemplifying the basic operation of the port monitor at the start of a job according to the first embodiment;

Fig. 11 is a flowchart exemplifying the basic operation of the port monitor when sending a job according to the first embodiment;

Fig. 12 is a flowchart exemplifying the basic operation of the port monitor at the end of a job according to the first embodiment;

Fig. 13 is a flowchart exemplifying the basic sequence of an archive module in the job archive system according to the embodiment;

Fig. 14 is a flowchart exemplifying the basic sequence of a spooler monitoring module in the printing history management system according to the embodiment;

Fig. 15 is a flowchart exemplifying the basic operation of an information input UI according to the embodiment;

Fig. 16 is a flowchart exemplifying the basic operation of a port monitor at the start of a job according to the second embodiment;

Fig. 17 is a flowchart exemplifying the basic operation of the port monitor when sending a job according to the second embodiment;

Fig. 18 is a flowchart exemplifying the basic operation of the port monitor at the end of a job according to the second embodiment;

Fig. 19 is a flowchart exemplifying the basic operation of a port monitor at the start of a job according to the third embodiment; and

Fig. 20 is a flowchart exemplifying the basic operation of the port monitor when sending a job according to the third embodiment.

### DESCRIPTION OF THE EMBODIMENTS

### <System Configuration>

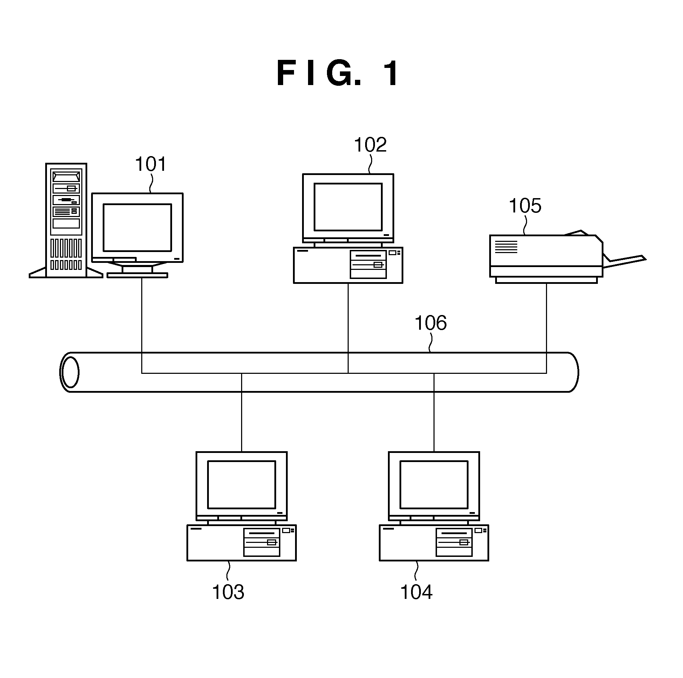

Fig. 1 is a view showing the configuration of a printing system according to an embodiment of the present invention. Information processing apparatuses 101 to 104 are connected to a network 106 by a network cable such as Ethernet®. Each information processing apparatus can execute a variety of programs such as an application program, and incorporates a printer driver having a function of converting print data into a printer language corresponding to a printer. Each information processing apparatus includes a communication device capable of communicating in two directions with another device connected to the network 106. The printer driver supports a plurality of printers. The printer (printing apparatus) is any one of printers of various types such as a laser beam printer which adopts electrophotography, an inkjet printer which adopts an inkjet method, and a printer which adopts a thermal transfer method.

The information processing apparatus 101 functions as a server (to be referred to as a management server) serving as a host computer. The information processing apparatus 102 functions as a server (to be referred to as a print server) serving as a host computer. The management server 101 and print server 102 are connected to the network 106 by a network cable. The management server 101 and print server 102 accumulate files used by respective devices connected to the network 106, and monitor the use state of a device connected to the network 106. The management server 101 and print server 102 comprise communication devices capable of communicating in two directions with another device connected to the network 106. The management server 101 and print server 102 manage a plurality of printers in addition to information processing apparatuses.

The information processing apparatuses or client computers 103 and 104, management server 101, and print server 102 are general information processing apparatuses. The management server 101 and print server 102 can also have the functions of the client computers 103 and 104 (the management server and print server will be sometimes called clients). The client computers 103 and 104, management server 101, and print server 102 store printing control programs for performing different control operations.

The management server 101 has a function of managing information of a printing apparatus 105, and aggregating and holding the printing log, operation log, and the like of the printing apparatus. The management server 101 has a function of collecting and holding printing logs and archive data from the client computers 103 and 104 and the print server 102. The management server 101 further manages user information and network device information. The print server 102 stores a job containing print data, printing of which is requested by the client computer 103 or 104, and sends the job to the printing apparatus. The print data contains a rendering instruction described in PDL supported by a printing apparatus, and data to be printed such as bitmap data.

The print server 102 receives job information (e.g., information not to be printed on a printed material, such as an owner name or job ID) not containing print data from the client computers 103 and 104, and manages the printing order of the client computers 103 and 104. The print server 102 notifies a client computer, whose turn to print has come, to permit sending of a job containing print data. Further, the print server 102 has a function of acquiring the status of the printing apparatus 105 and various kinds of information of a job, and notifying the client computers 103 and 104 of them. The printing apparatus 105 is a network printer, which is connected to the network 106 via a network interface (not shown). The network printer 105 analyzes a job which is sent from the client computer 102, 103, or 104 and contains print data. The network printer 105 converts each page into an image and prints each page. The network 106 is connected to the client computers 103 and 104, servers 101 and 102, network printer 105, and the like.

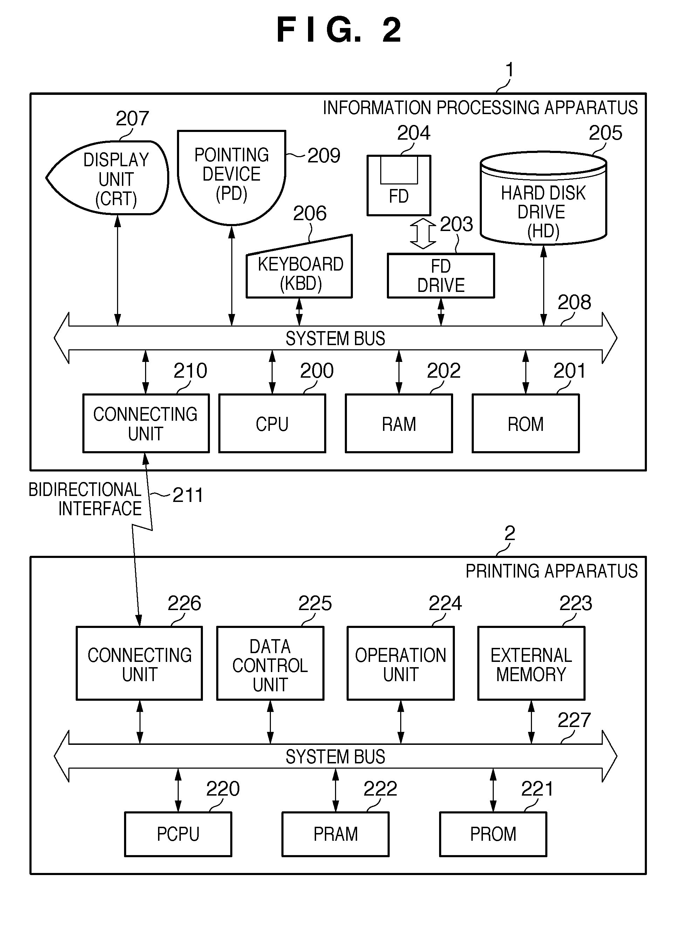

The internal arrangements of the information processing apparatus and printing apparatus will be explained with reference to Fig. 2. A CPU 200 is the controller of the client computer 102, 103, or 104. The CPU 200 executes an application program, a printer driver program, an OS, a network printer control program according to the present invention, and the like stored in a hard disk drive (HD) 205. The CPU 200 controls a RAM 202 to temporarily store information, files, and the like necessary to execute a program. A ROM 201 is a storage unit which internally stores programs such as a basic I/O program, and various data such as font data and template data used in document processing. The RAM 202 serving as a temporary storage unit functions as a main memory, work area, and the like for the CPU 200. An FD drive 203 is a storage medium reading/writing unit.

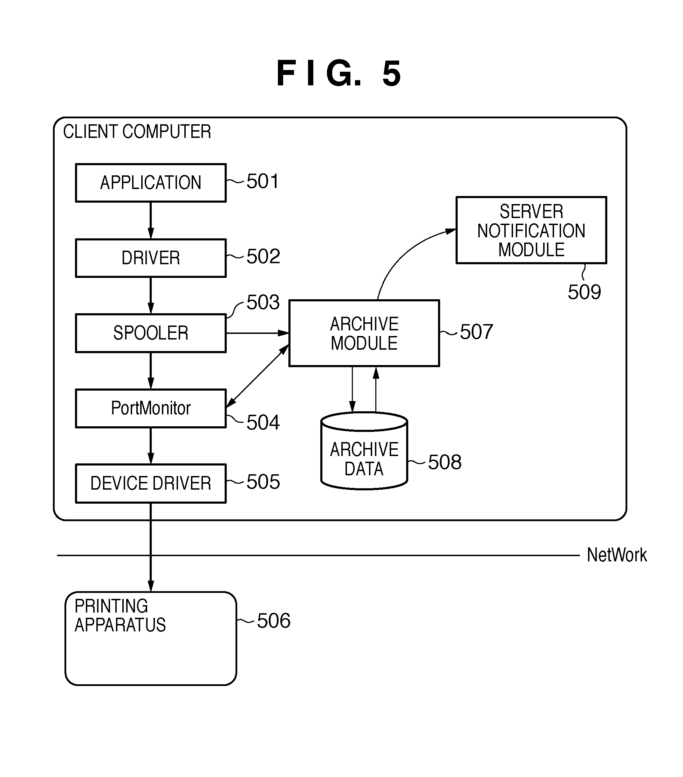

As shown in Fig. 5 (to be described later), a program or the like stored in a floppy® disk (FD) 204 serving as a storage medium can be loaded into the computer system of the client via the FD drive 203.
The storage medium reading unit is not limited to the FD drive. Also, the storage medium is not limited to an FD, and is arbitrarily a CD-ROM, CD-R, CD-RW, PC card, DVD, IC memory card, MO, memory stick, or the like. The FD 204 stores a program readable by a computer. The HD 205 is one of external storage units, and is a hard disk drive functioning as a large-capacity memory. The HD 205 stores an application program, printer driver program, OS, network printer control program, related program, and the like. The HD 205 further holds a spooler. The spooler is a client spooler in a client computer and a server spooler in the print server 102. The print server 102 stores job information received from a client computer, generates a table for controlling the order, and stores the table in the HD 205 serving as an external storage unit. A keyboard (KBD) 206 is used to input a device control command and the like from a user to a client computer or from an operator or administrator to a print server. A display unit (CRT) 207 displays a command input from the keyboard 206, a printer status, and the like to a user. A system bus 208 manages a data flow within a client computer. The system bus 208 connects the building components of an information processing apparatus 1 to each other. A client computer exchanges data with an external device via a pointing device (PD) 209. A connecting unit 210 is connected to a connecting unit 226 of a printing apparatus 2 (to be described later) via a bidirectional interface 211 mentioned above. The connecting unit 210 can receive a printing control command (sent data) and notify the internal status of the printing apparatus and the like.

The embodiment exemplifies a case in which a network printer control program and related data are directly loaded from the FD 204 to the RAM 202 and executed. Alternatively, when operating the network printer control program from the FD 204, the network printer control program already installed in the HD 205 may be loaded into the RAM 202. The method of calling a program and related data when executing them is not limited to these examples and is arbitrary. The medium which stores the network printer control program is not limited to an FD and may be a CD-ROM, CD-R, PC card, DVD, IC memory card, or the like. The network printer control program may be stored in the ROM 201, formed as part of the memory map, and executed directly by the CPU 200.

The detailed arrangement of the printing apparatus will be explained. The printing apparatus 2 includes, as main building components, the connecting unit 226, a data control unit (printer engine) 225, an operation unit 224, an external memory 223, a printer CPU (PCPU) 220, a PRAM 222, and a PROM 221, details of which will be described later. These building components are connected to each other via a system bus 227. The PCPU 220 controls the overall printing apparatus 2. Based on a control program stored in the PROM 221 or external memory 223 (to be described later), the PCPU 220 sends an image signal to the data control unit 225 in response to a printer control command (sent data) received by the connecting unit 226. The PRAM 222 functions as the main memory of the PCPU 220, and has a temporary storage area used as a work data area for various data when the PCPU 220 executes control.
The external memory 223 is also connected as an option, and stores font data, emulation programs, form data, and the like. The PROM 221 is an internal printer memory, and stores a variety of data, a printer control program for controlling the printing apparatus, and the like, similar to an external memory.

The data control unit 225 is a printer engine which is controlled by the PCPU 220. The data control unit 225 receives an image signal output via the system bus 227 and performs actual print processing in accordance with a control program stored in the PROM 221 or external memory 223. The operation unit 224 is formed from an input unit including an operation panel and operation switch, and a display unit such as an LED or liquid crystal panel. The operation unit 224 receives an operation by an operator and displays the result. The operator can designate and confirm settings of the printing apparatus 2 in the embodiment via the operation unit 224. The connecting unit 226 is connected to the connecting unit 210 of the information processing apparatus 1 via the bidirectional interface 211. The connecting unit 226 can receive a printing control command (sent data) and notify the internal status of the printing apparatus and the like.
Software which implements the same functions as those of the above-described units can replace the hardware units. The present invention is applicable regardless of whether the client computer which creates a job, the print server which sends a job, and the management server which manages the system are formed from one or separate information processing apparatuses.

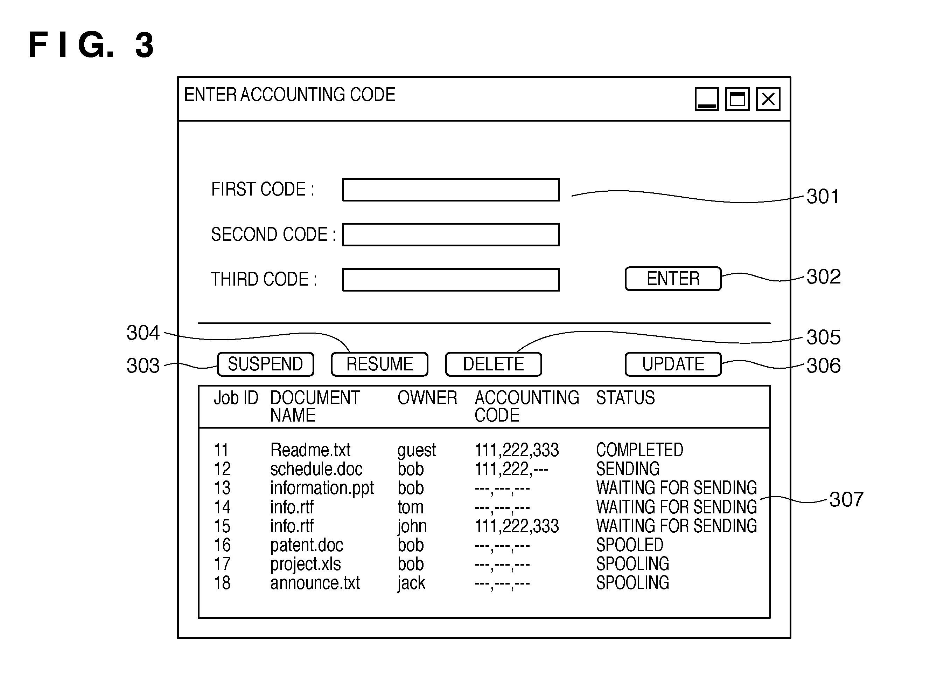

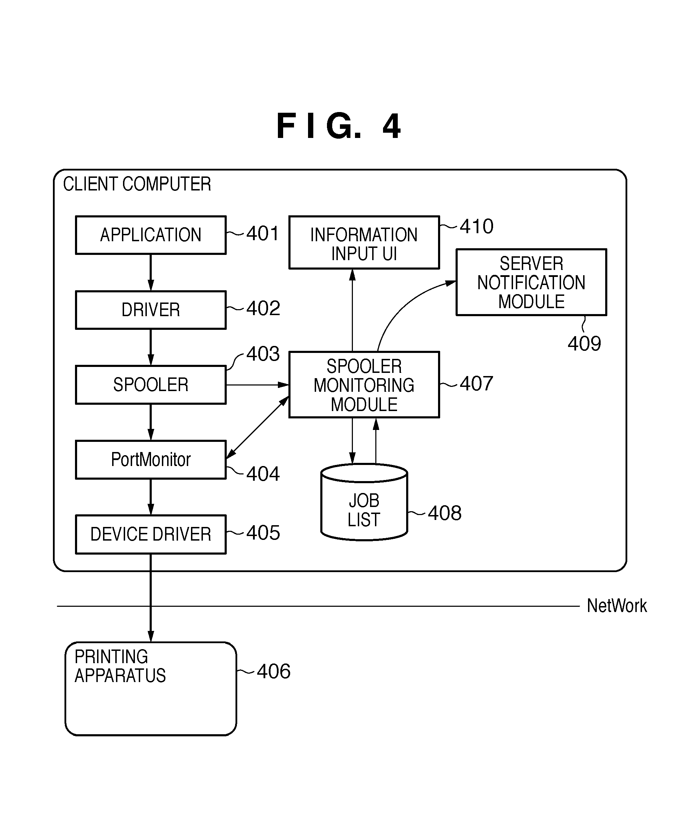

Fig. 3 exemplifies an information input window according to the embodiment. The dialog of this window is displayed on the display unit 207 of the client computer by a spooler monitoring module to be described later with reference to Fig. 4. The dialog accepts an input from a user via an input device such as the keyboard 206. The dialog includes an accounting code enter area 301, an enter button 302, job operation buttons (suspend 303, resume 304, and delete 305), an update button 306, and a job list display portion 307. As a job list, the job list display portion 307 can display a list of items such the job ID, document name, job owner, accounting code, and status for each job. The user can select a plurality of jobs. The selected job is displayed reversely. Upon selecting a job, the accounting code enter area 301 is validated to allow the user to enter an arbitrary character string.

### <Job Flow>

Fig. 4 is a view exemplifying the relationship between modules running on the client computer and the printing apparatus which configure a printing history management system, and the flow of a job according to the embodiment. The client computer uses Microsoft Windows® as an OS for a general-purpose personal computer (corresponding to an information processing apparatus in the present invention). The client computer activates an application 401 such as Microsoft Word® having a print processing function. The user creates a document with instruction devices such as the keyboard 206 and pointing device 209, and inputs a print instruction via a print instruction unit prepared in the application. The application 401 transfers print data to a printer driver 402 to create a job.
The printer driver 402 transfers the created job to a spooler 403. The spooler 403 schedules jobs received from a plurality of drivers for each printer designated by the user. The spooler 403 transfers the job to a port monitor 404 corresponding to a port connected to the printer. The port monitor 404 properly calls a device driver 405 corresponding to a port (e.g., USB port or network port), and transfers the job to the device driver 405. According to a predetermined method, the device driver 405 establishes a connection with a printing apparatus 406 via the connecting unit 210, and transfers the job to the printing apparatus 406. A spooler monitoring module 407 automatically starts operating upon activation of the client computer, and monitors the spooler 403 using a spooler function available in the OS. The spooler monitoring module 407 monitors addition, deletion, and change of a printer driver, and generation and status of a job for each printer driver. When it is determined that a job has been generated in the spooler, the spooler monitoring module 407 stores the job in the storage area of an available job list 408 together with attachment information such as a status, size, printer driver name, owner name, document name, and date & time. At the same time, the spooler monitoring module 407 displays an information input UI 410. The information input UI 410 displays the information input dialog shown in Fig. 3 on the display unit 207 of the client computer. Upon receiving a user input, the information input UI 410 reflects the input information in job information held in the job list 408 stored in the HD 205. When predetermined log notification time has come, the spooler monitoring module 407 transfers the log to a server notification module 409. According to a predetermined method, the server notification module 409 establishes a connection with a data-collection server (not shown) via the connecting unit 210, and notifies the data-collection server of the log.

Fig. 5 is a view exemplifying the relationship between modules running on the client computer and the printing apparatus which configure a job archive system, and the flow of a job according to the embodiment. The client computer uses Microsoft Windows® as an OS for a general-purpose personal computer (corresponding to an information processing apparatus in the present invention). The client computer activates an application 501 such as Microsoft Word® having a print processing function. The user creates a document with input devices such as the keyboard 206 and pointing device 209, and designates printing via a print instruction unit prepared in the application. The application 501 transfers print data to a printer driver 502 to create a job. The printer driver 502 transfers the created job to a spooler 503. The spooler 503 schedules jobs received from a plurality of drivers for each printer designated by the user. The spooler 503 transfers the job to a port monitor 504 corresponding to a port connected to the printer.

The port monitor 504 properly calls a device driver 505 corresponding to a port (e.g., USB port or network port), and transfers the job to the device driver 505. According to a predetermined method, the device driver 505 establishes a connection with a printing apparatus 506 via the connecting unit 210, and transfers the job to the printing apparatus 506. An archive module 507 automatically starts operating upon activation of the client computer. The archive module 507 receives job data of a job from the port monitor 504, generates archive data, and saves it in archive data 508 stored in the HD 205. When predetermined archive data sending time has come, the archive module 507 acquires archive data from the archive data 508 and transfers it to a server notification module 509. According to a predetermined method, the server notification module 509 establishes a connection with an archive data collection server (not shown) via the connecting unit 210, and notifies the archive data collection server of the archive data.

### <Job Deletion Sequence>

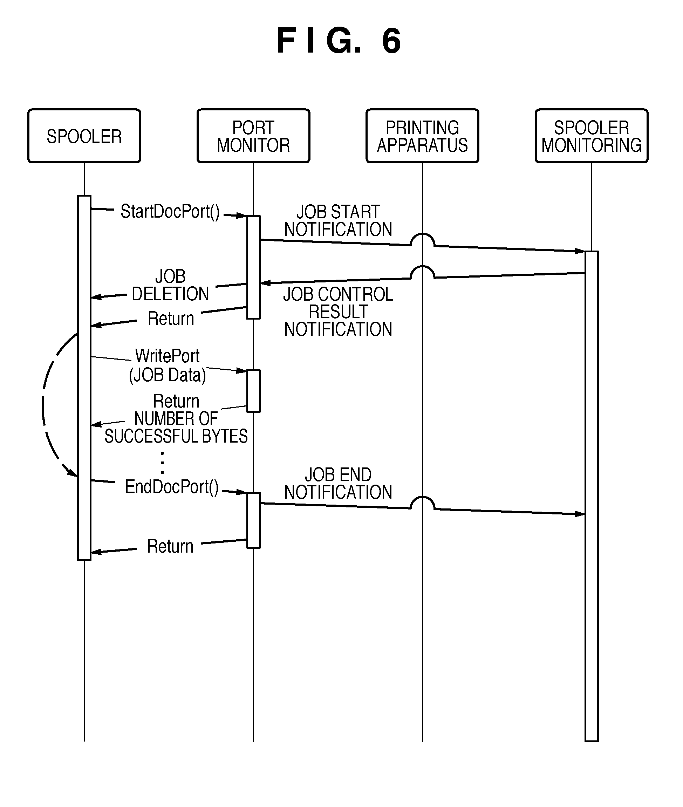

Fig. 6 exemplifies a job deletion sequence in the printing history management system. The spooler system sequentially extracts jobs for respective printers from a list of spooled jobs, appropriately calls public functions of the port monitor, and sends the job to the printing apparatus. At the start of a job, the spooler system calls a public function StartDocPort() of the port monitor. After calling StartDocPort(), the port monitor notifies the spooler monitoring module of the start of the job, and receives a job control result from the spooler monitoring module. The spooler monitoring module notifies a job control result "job deletion" if a condition for inhibiting printing is satisfied, such as excess of the upper limit of printing when the user tries to print over the upper limit value of the print right, or a printing limitation (e.g., inhibition of color printing). When the job control result is "job deletion", the port monitor requests the spooler to delete the job, and ends StartDocPort(). When requested to delete the job, the spooler system calls a public function EndDocPort() of the port monitor without calling a public function WritePort() of the port monitor. After calling EndDocPort(), the port monitor notifies the spooler monitoring module of the end of the job, and ends EndDocPort(). After the end of calling EndDocPort(), the spooler system deletes the job from the spooler.

A conventional method executes job deletion processing according to this sequence. However, this method cannot archive a job to be deleted.

### <Job Suspension Sequence>

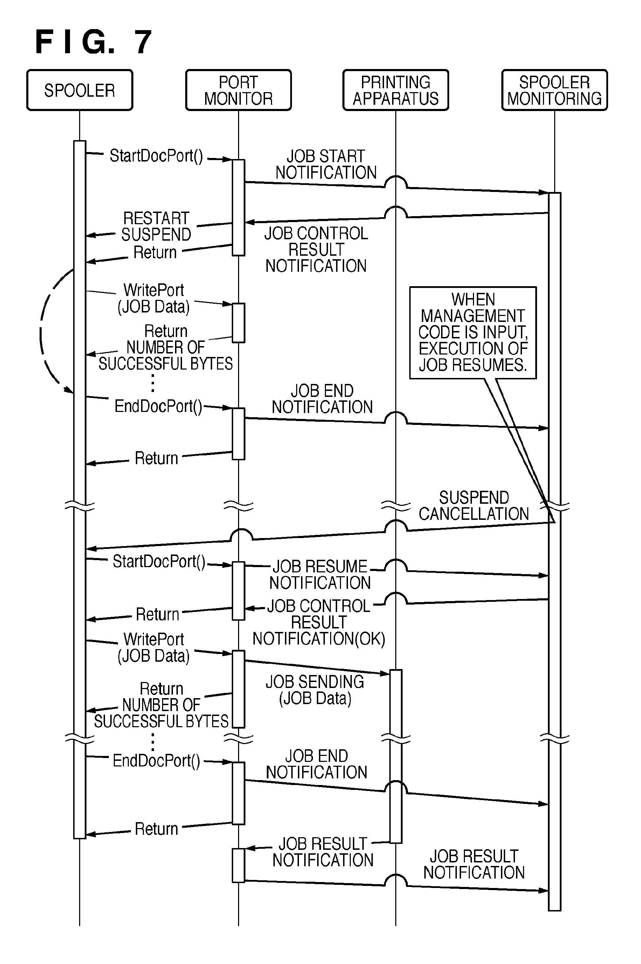

Fig. 7 exemplifies a job suspension sequence in the printing history management system. The spooler system sequentially extracts jobs for respective printers from a list of spooled jobs, appropriately calls public functions of the port monitor, and sends the job to the printing apparatus. At the start of a job, the spooler system calls the public function StartDocPort() of the port monitor. After calling StartDocPort(), the port monitor notifies the spooler monitoring module of the start of the job, and receives a job control result from the spooler monitoring module. The spooler monitoring module notifies a job control result "job suspension" if a condition for inhibiting immediate execution of printing is satisfied, such as the absence of setting of an accounting code or excess of the upper limit of printing in a designated period. When the job control result is "job suspension", the port monitor requests the spooler to restart and suspend the job, and ends StartDocPort(). When requested to restart and suspend the job, the spooler system calls the public function EndDocPort() of the port monitor without calling the public function WritePort() of the port monitor. After calling EndDocPort(), the port monitor notifies the spooler monitoring module of the end of the job, and ends EndDocPort().

After the lapse of a predetermined time, if the user cancels the job suspension condition by, for example, inputting an accounting code, the spooler monitoring module requests the spooler system to resume the job. When requested to resume the job, the spooler system calls the public function StartDocPort() of the port monitor. After calling StartDocPort(), the port monitor notifies the spooler monitoring module of the start of the job, and receives job execution permission as a job control result from the spooler monitoring module. Upon receiving the job control result "job execution permission", the port monitor ends StartDocPort(). Then, the spooler system calls the public function WritePort() of the port monitor, and transfers the job to the port monitor. If the job size is large, the spooler system divides the job, as needed, and calls WritePort() a plurality of number of times. After calling WritePort(), the port monitor sends the received job to the printing apparatus, and returns the successful sending size to the spooler system. If the successful sending size returned by one WritePort() call is smaller than the transferred job size, the spooler system transfers a job of the remaining size by the next WritePort() call. This processing is repeated till the end of sending all data of the job. After all data are sent, the spooler system calls the public function EndDocPort() of the port monitor. After calling EndDocPort(), the port monitor notifies the spooler monitoring module of the end of the job, and ends EndDocPort(). After the end of calling EndDocPort(), the spooler system deletes the job from the spooler. When notified of the end of the job from the printing apparatus, the port monitor notifies the spooler monitoring module of the result of the job.

The job suspension processing is done based on this sequence. According to this method, however, a job to be suspended is archived at the resume of processing, increasing the load of sending processing. In addition, a target job cannot be archived.

### <Job Archive Sequence>

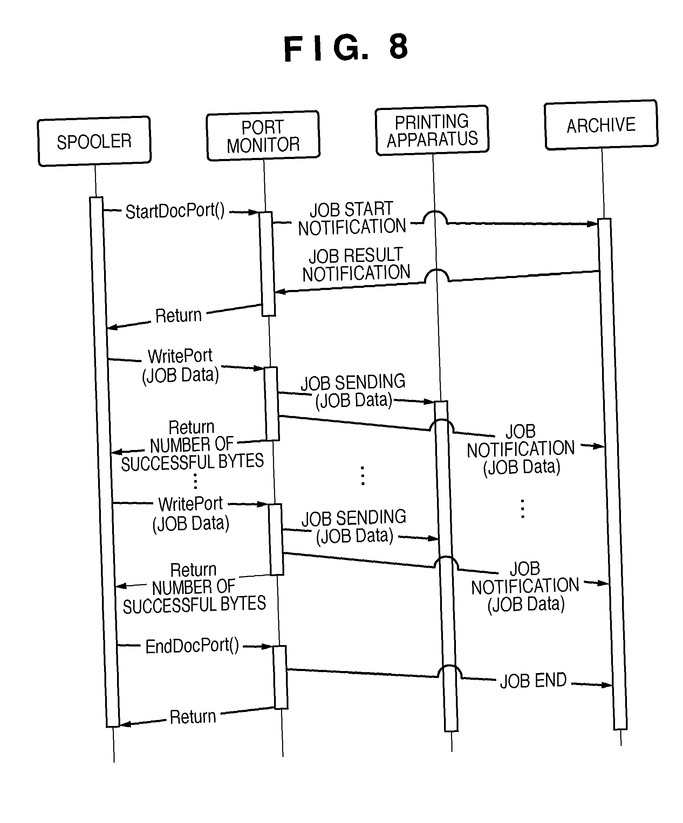

Fig. 8 exemplifies a job archive sequence in the job archive system. The spooler system sequentially extracts jobs for respective printers from a list of spooled jobs, appropriately calls public functions of the port monitor, and sends the job to the printing apparatus. At the start of a job, the spooler system calls the public function StartDocPort() of the port monitor. After calling StartDocPort(), the port monitor notifies the archive module of the start of the job, and receives a job control result from the archive module. If the archive module determines that the job needs to be archived, it notifies a job control result "archive is necessary".

When the job control result is "archive is necessary", the port monitor ends StartDocPort(). The spooler system calls the public function WritePort() of the port monitor, and transfers the job to the port monitor. If the job size is large, the spooler system divides the job, as needed, and calls WritePort() a plurality of number of times. After calling WritePort(), the port monitor sends the received job to the printing apparatus. Further, the port monitor transfers, to the archive module, the job of the successful sending size to the printing apparatus. Upon receiving the job, the archive module creates and holds archive data. If the successful sending size returned by one WritePort() call is smaller than the transferred job size, the spooler system transfers a job of the remaining size by the next WritePort() call. This processing is repeated till the end of sending all data of the job. After all data are sent, the spooler system calls the public function EndDocPort() of the port monitor. After calling EndDocPort(), the port monitor notifies the archive module of the end of the job, and ends EndDocPort(). After the end of calling EndDocPort(), the spooler system deletes the job from the spooler.

### <First Embodiment>

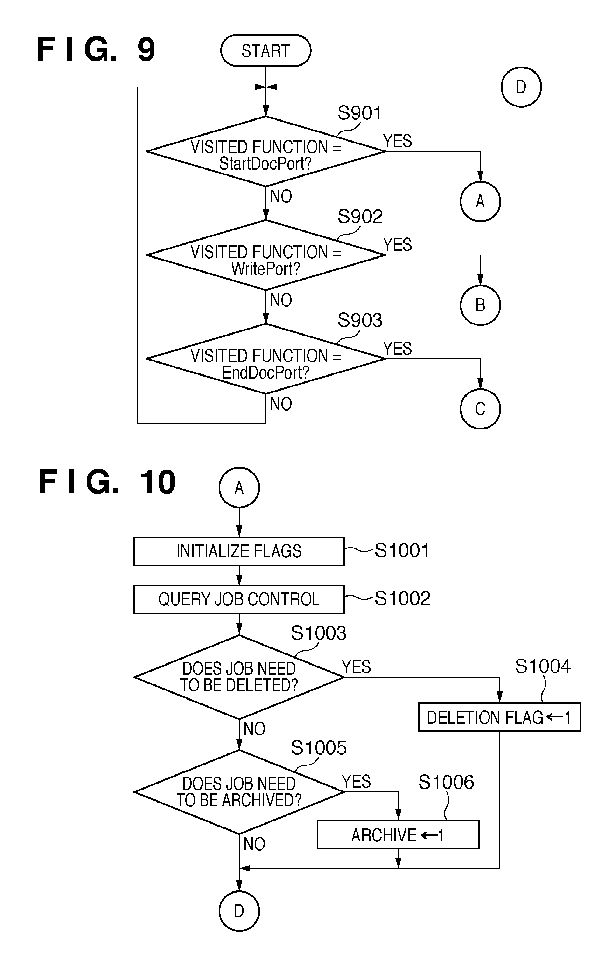

The first embodiment will be explained with reference to Figs. 9, 10, 11, 12, 13, 14, and 15. Figs. 9 to 12 show a series of divided sequences. Main processors (spooler, port monitor, printing apparatus, spooler monitoring module, and archive module) in Figs. 6 to 8 cope with Figs. 9 to 15.

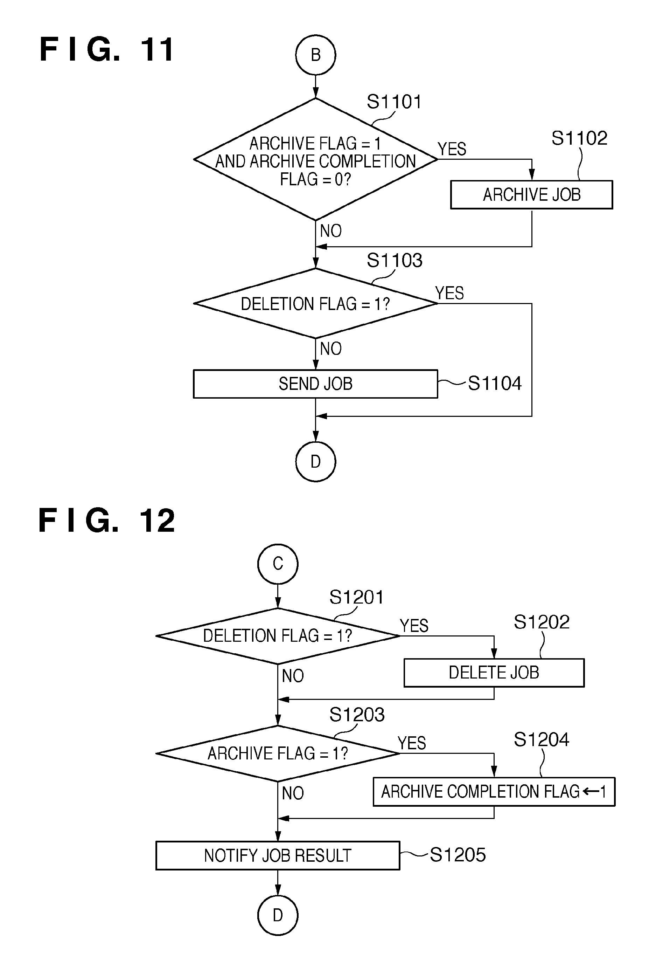

Fig. 9 is a flowchart exemplifying the basic operation of the port monitor according to the first embodiment. For descriptive convenience, the port monitor automatically starts upon activation of the spooler system on Microsoft Windows®, and automatically ends at the end of the spooler system.
The port monitor is assumed to adopt print monitor functions laid open to the public by MSDN (Microsoft Developer Network)®. In S901, the port monitor determines a function called by the spooler. If the function is a public function StartDoc(), the process advances to sequence (A) in Fig. 10 to perform processing at the start of a job. If the port monitor determines in S901 that the function is not StartDoc(), the process advances to S902 to determine the function called by the spooler. If the function is a public function WritePort(), the process advances to sequence (B) in Fig. 11 to perform job sending processing. If the port monitor determines in S902 that the function is not WritePort(), the process advances to S903 to determine the function called by the spooler. If the function is a public function EndDocPort(), the process advances to sequence (C) in Fig. 12 to perform job end processing. If the port monitor determines in S903 that the function is not the public function EndDocPort(), the process returns to S901. In this case, other function processes may be done, but a description thereof will be omitted in the embodiment.

Fig. 10 is a flowchart exemplifying the basic operation of the port monitor at the start of a job according to the first embodiment. In S1001, the port monitor initializes flags. These flags are three flags for a target job: a "deletion flag" for determining whether to delete a job, an "archive flag" for determining whether to archive a job, and an "archive completion flag" representing whether a job has been archived. The port monitor uses a CPU 200 to ensure an area for each job in the work area of a storage device such as a RAM 202. The port monitor sets and saves an initial value "0" in each flag. The initial value "0" indicates "none" in all the flags.
In S1002, the port monitor queries job control. More specifically, the port monitor inquires a job control method of the spooler monitoring module and archive module via an available communication means. At this time, the port monitor functions as a job control inquiry unit. In S1003, the port monitor uses the CPU 200 to determine, based on the query result in S1002, whether the job needs to be deleted. If the port monitor determines in S1003 that the job needs to be deleted, the process advances to S1004. The port monitor uses the CPU 200 to set and save "1" in the deletion flag ensured in the storage area of the RAM 202 or the like. After that, the process returns to S901 in Fig. 9 (D). If the port monitor determines in S1003 that the job need not be deleted, the process advances to S1005. The port monitor uses the CPU 200 to determine, based on the query result in S1002, whether the job needs to be archived. If the port monitor determines in S1005 that the job needs to be archived, it uses the CPU 200 to set and save "1" in the archive flag ensured in the storage area of the RAM 202 or the like in S1006. The process then returns to S901 in Fig. 9 (D). If the port monitor determines in S1005 that the job need not be archived, the process returns to S901 in Fig. 9 (D).

Fig. 11 is a flowchart exemplifying the basic operation of the port monitor when sending a job according to the first embodiment. In S1101, the port monitor determines whether the job needs to be archived and has not been archived. More specifically, the port monitor uses the CPU 200 to search for flags ensured in the work area allocated in the storage area of the RAM 202 or the like. If the archive flag of the job is "1" and the archive completion flag is "0", the port monitor determines that the job needs to be archived and has not been archived. If the port monitor determines in S1101 that the job needs to be archived and has not been archived, the process advances to S1102 to archive the job. More specifically, the port monitor transfers the job to the archive module via an available communication means. The archive module archives the received job by an available method, and saves the archive data in an area ensured in a storage device such as an HD 205. If the port monitor determines in S1101 that the job need not be archived or has been archived, the process advances to S1103 to determine whether to send the job. More specifically, the port monitor uses the CPU 200 to search for flags ensured in the work area allocated in the storage area of the RAM 202 or the like. If the deletion flag of the job is "1", the port monitor determines that the job need not be sent, and the process returns to S901 in Fig. 9 (D). If the port monitor determines in S1103 that the job needs to be sent, the process advances to S1104 to send the job to the printing apparatus via the device driver 405 by an available method. Subsequently, the process returns to S901 in Fig. 9 (D).

Fig. 12 is a flowchart exemplifying the basic operation of the port monitor at the end of a job according to the first embodiment. In S1201, the port monitor determines whether the job needs to be deleted. More specifically, the port monitor uses the CPU 200 to search for flags ensured in the work area allocated in the storage area of the RAM 202 or the like. If the job deletion flag of the job is "1", the port monitor determines that the job needs to be deleted. If the port monitor determines in S1201 that the job needs to be deleted, the process advances to S1202 to delete the job. The port monitor requests the spooler system to delete the job by an available means. This can be achieved by a method of, for example, transferring a job handle command JOB_CONTROL_CANCEL of the job as a parameter to a spooler function SetJob() prepared in Microsoft Windows®. The process then advances to S1203. If the port monitor determines in S1201 that the job need not be deleted, the process advances to S1203. In S1203, the port monitor determines whether the job has been archived. More specifically, the port monitor uses the CPU 200 to search for flags ensured in the work area allocated in the storage area of the RAM 202 or the like. If the archive flag of the job is "1", the port monitor determines that the job has been archived. The process then advances to S1205. If the port monitor determines in S1203 that the job has been archived, it sets "1" in the archive completion flag in S1204. More specifically, the port monitor uses the CPU 200 to set and save "1" in the archive completion flag ensured in the storage area of the RAM 202 or the like. Thereafter, the process advances to S1205. In S1205, the port monitor notifies the spooler monitoring module of the job result. The process then returns to S901 in Fig. 9 (D).

### <Basic Sequence of Archive Module>

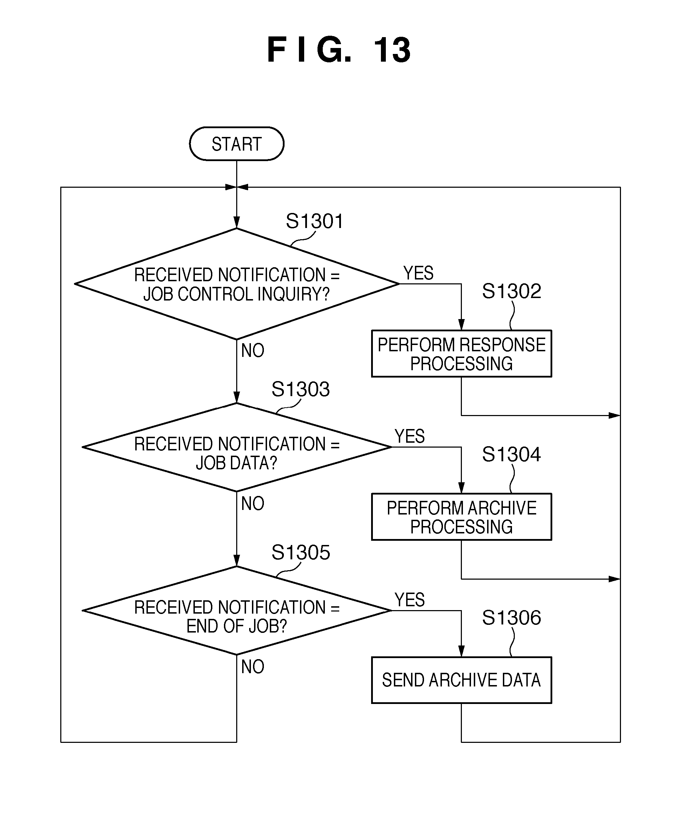

Fig. 13 is a flowchart exemplifying the basic sequence of the archive module in a job archive system according to the first embodiment. For descriptive convenience, the archive module starts upon activation of an OS installed in a client computer. A communication path is established in advance between the archive module and the port monitor. In S1301, the archive module determines whether it has received a job control inquiry from the port monitor. If the archive module determines in S1301 that it has received a job control inquiry from the port monitor, the process advances to S1302 to respond to the port monitor. More specifically, based on a response processing method installed in advance in the archive module, the archive module notifies the port monitor that archive is necessary. Thereafter, the process returns to S1301. This response processing method can be a conventional one and a description thereof will be omitted. If the archive module determines in S1301 that it has not received a job control inquiry from the port monitor, the process advances to S1303 to determine whether the archive module has received job data. If the archive module determines in S1303 that it has received job data, the process advances to S1304. The archive module uses the CPU 200 to create archive data based on an archive processing method installed in advance and hold it in a storage device such as the HD 205. This archive processing method can be a conventional one and a description thereof will be omitted. The process then returns to S1301. If the archive module determines in S1303 that it has not received job data, the process advances to S1305 to determine whether the archive module has received a job end notification. If the archive module determines in S1305 that it has received a job end notification, the process advances to S1306. The archive module sends, via a server notification module 509, the archive data created in S1304 based on a predetermined archive processing method, in order to notify an archive collection server of the archive data. Then, the process returns to S1301. If the archive module determines in S1305 that it has not received a job end notification, the process returns to S1301.

### <Basic Sequence of Spooler Monitoring Module>

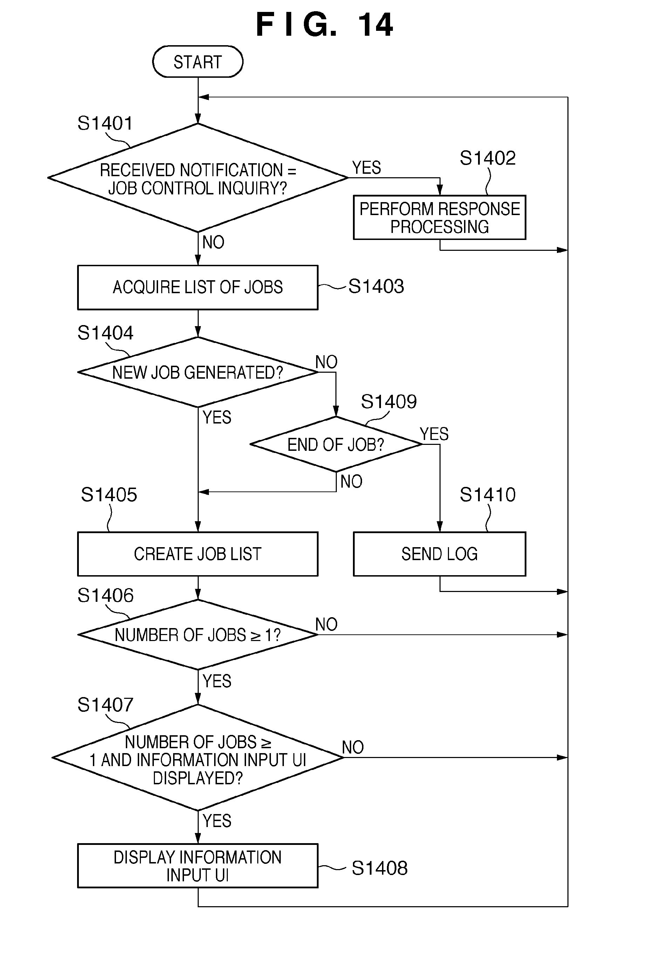

Fig. 14 is a flowchart exemplifying the basic sequence of the spooler monitoring module in a printing history management system according to the first embodiment. For descriptive convenience, the spooler monitoring module starts upon activation of an OS installed in a client computer. A communication path is established in advance between the spooler monitoring module and the port monitor. In S1401, the spooler monitoring module determines whether it has received a job control inquiry from the port monitor. If the spooler monitoring module determines in S1401 that it has received a job control inquiry from the port monitor, the process advances to S1402 to respond to the port monitor. More specifically, based on a response processing method installed in advance in the spooler monitoring module, the spooler monitoring module notifies the port monitor that the job needs to be deleted. However, the response processing is not limited to job deletion, and may be the above-mentioned job suspension or other contents. Thereafter, the process returns to S1401. This response processing method can be a conventional one and a description thereof will be omitted. If the spooler monitoring module determines in S1401 that it has not received a job control inquiry, the process advances to S1403. In S1403, the spooler monitoring module acquires a list of jobs. For example, the spooler monitoring module calls a Win32 function EnumJob() prepared in Microsoft Windows®, acquires a list of print jobs, and saves it in a work area ensured in advance in a storage device such as the RAM 202 or HD 205. The process advances to S1404 to determine whether a new job has been generated in the list of jobs acquired in S1403. More specifically, the spooler monitoring module uses the CPU 200 to compare the acquired list of jobs with a job list held in the printing history management system.
If a job having a new job ID has been added, the spooler monitoring module determines that the new job has been generated. The job list will be described later. If the spooler monitoring module determines in S1404 that no new job has been generated, the process advances to S1409. If the spooler monitoring module determines in S1404 that a new job has been generated, the process advances to S1405. The spooler monitoring module extracts the new job and information attached to it from the list of jobs acquired in S1403, and adds them to the job list.

The job list has information attached to each job, such as a job ID and document name, and also has information added for each job by a printing system, such as an accounting code. When the spooler monitoring module is activated, the job list is saved in a predetermined location ensured in a storage device such as the RAM 202 or HD 205. Information attached to a job is acquired by a Win32 function GetJob() prepared in Microsoft Windows®, a printing system-specific means, or the like.

After that, the process advances to S1406. In S1406, the spooler monitoring module determines whether the job list created in S1405 holds one or more jobs. More specifically, the spooler monitoring module uses the CPU 200 to search for a job list 408 saved in a predetermined location ensured in a storage device such as the RAM 202 or HD 205. The spooler monitoring module calculates the number of job records. If the spooler monitoring module determines that the job list does not hold any job, the process returns to S1401.
If the spooler monitoring module determines in S1406 that the job list holds one or more jobs, the process advances to S1407 to determine whether an information input UI 410 has been displayed. For example, the spooler monitoring module calls a Win32 function FindWindow() prepared in Microsoft Windows®. If there is a window used by the information input UI 410, the spooler monitoring module determines that the information input UI 410 has already been displayed.

If the information input UI has been displayed, the process returns to S1401. If the spooler monitoring module determines in S1407 that the information input UI 410 has not been displayed, the process advances to S1408 to display the information input UI 410 on a display unit such as the display unit 207 based on predetermined procedures. The process then returns to S1401. If the spooler monitoring module determines in S1404 that no new job has been generated, the process advances to S1409 to determine whether the job has ended. More specifically, the spooler monitoring module uses the CPU 200 to compare the list of jobs acquired in S1403 with the job list 408 saved in a predetermined location ensured in a storage device such as the RAM 202 or HD 205. If a job contained in the job list does not exist in the list of jobs, the spooler monitoring module determines that the job held in the job list has ended. If the spooler monitoring module determines in S1409 that the job has ended, the process advances to S1410 to send the log so as to notify the data-collection server of it. More specifically, the spooler monitoring module uses the CPU 200 to extract the record of the ended job from the job list 408 saved in a predetermined location ensured in a storage device such as the RAM 202 or HD 205, create a log, and transfer it to a server notification module 409. The spooler monitoring module deletes the job from the job list 408, and saves it in a predetermined location ensured in a storage device such as the RAM 202 or HD 205. The server notification module 409 notifies the data-collection server of the log according to predetermined procedures. After that, the process returns to S1401 to repeat the subsequent processing. If the spooler monitoring module determines in S1409 that the job has not ended, the process advances to S1405 to execute the subsequent processing.

### <Basic Sequence of Information Input UI>

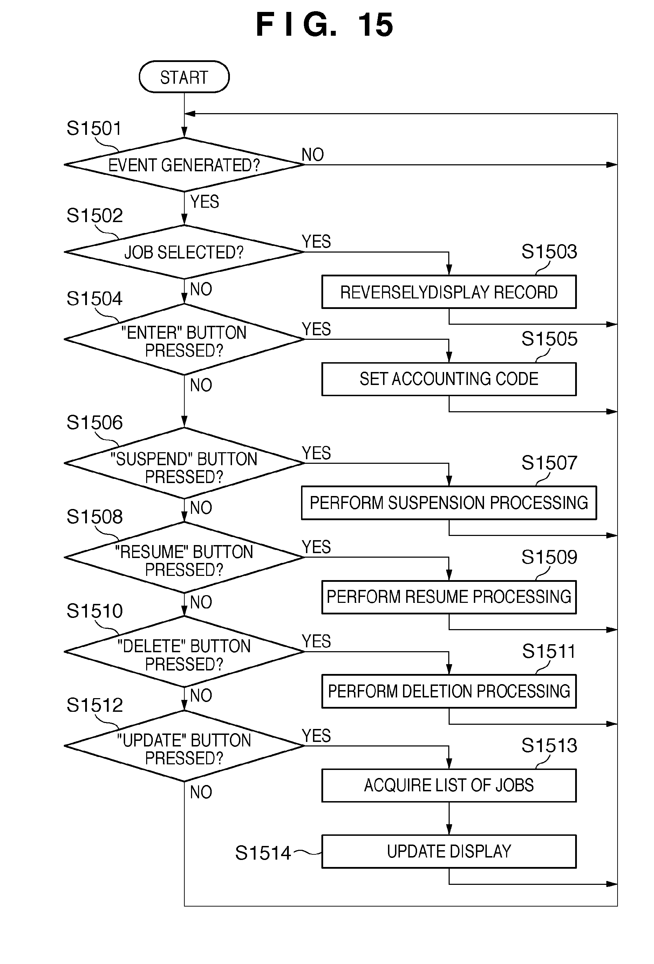

Fig. 15 is a flowchart exemplifying the basic operation of the information input UI according to the first embodiment. In S1501, the information input UI determines whether an event such as clicking of a button has occurred. For example, according to a method disclosed in Microsoft MSDN Library®, an operation such as clicking of a mouse or keyboard input, and an ID for uniquely determining each resource such as a button or list box in a window are notified as an event. S1501 is repeated until an event occurs. If the information input UI determines in S1501 that an event has occurred, the process advances to S1502 to determine whether the event is job selection. More specifically, when the event acquired in S1501 contains an ID representing the record of a job list area in Fig. 3 and the manipulation of the left button of the mouse, the information input UI determines that the event is job selection. If the information input UI determines in S1502 that the event is job selection, the process advances to S1503 to reversely display the record based on an available method. The process returns to S1501 to repeat the subsequent processing. If the information input UI determines in S1502 that the event is not job selection, the process advances to S1504 to determine whether the user has clicked an "enter" button. More specifically, when the event acquired in S1501 contains an ID representing the "enter" button in Fig. 3 and the manipulation of the left button of the mouse, the information input UI determines that the event is clicking of the "enter" button.

If the information input UI determines in S1504 that the event is clicking of the "enter" button, it sets an accounting code in the job list in S1505. The information input UI uses the CPU 200 to search for a record reversely displayed in the job list area in Fig. 3 based on an available method and acquire a job ID from the detected record. The information input UI sets the values of the first, second, and third codes in Fig. 3 in the accounting code area of the record having this ID in the job list saved in a storage device such as the RAM 202 or HD 205. Thereafter, the process advances to S1501 to repeat the subsequent processing. If the information input UI determines in S1504 that the event is not clicking of the "enter" button, it determines in S1506 whether the user has clicked a "suspend" button. More specifically, when the event acquired in S1501 contains an ID representing the "suspend" button in Fig. 3 and the manipulation of the left button of the mouse, the information input UI determines that the event is clicking of the "suspend" button. If the spooler monitoring module determines in S1506 that the event is clicking of the "suspend" button, the process advances to S1507. The information input UI uses the CPU 200 to search for a record reversely displayed in the job list area in Fig. 3 based on an available method and acquire a job ID from the detected record. The information input UI designates the job by using a Win32 function SetJob() prepared in Microsoft Windows®, and suspends (pauses) the job. The process then returns to S1501 to repeat the subsequent processing.

If the information input UI determines in S1506 that the event is not clicking of the "suspend" button, the process advances to S1508 to determine whether the user has clicked a "resume" button. More specifically, when the event acquired in S1501 contains an ID representing the "resume" button in Fig. 3 and the manipulation of the left button of the mouse, the information input UI determines that the event is clicking of the "resume" button. If the information input UI determines in S1508 that the event is clicking of the "resume" button, the process advances to S1509. The information input UI uses the CPU 200 to search for a record reversely displayed in the job list area in Fig. 3 based on an available method and acquire a job ID from the detected record. The information input UI designates the job by using the Win32 function SetJob() prepared in Microsoft Windows®, and resumes the job. The process returns to S1501 to repeat the subsequent processing. If the information input UI determines in S1508 that the event is not clicking of the "resume" button, the process advances to S1510 to determine whether the user has clicked a "delete" button. More specifically, when the event acquired in S1510 contains an ID representing the "delete" button in Fig. 3 and the manipulation of the left button of the mouse, the information input UI determines that the event is clicking of the "delete" button. If the information input UI determines in S1510 that the event is clicking of the "delete" button, the process advances to S1511. The information input UI uses the CPU 200 to search for a record reversely displayed in the job list area in Fig. 3 based on a prepared method and acquire a job ID from the detected record.

The information input UI designates the job by using the Win32 function SetJob() prepared in Microsoft Windows®, and deletes the job. The process returns to S1501 to repeat the subsequent processing. If the information input UI determines in S1510 that the event is not clicking of the "delete" button, the process advances to S1512 to determine whether the user has clicked an "update" button. More specifically, when the event acquired in S1501 contains an ID representing the "update" button in Fig. 3 and the manipulation of the left button of the mouse, the information input UI determines that the event is clicking of the "update" button. If the information input UI determines in S1512 that the event is clicking of the "update" button, the process advances to S1513 to acquire a list of jobs again. For example, the information input UI calls a Win32 function EnumJob() or Win32 function GetJob() prepared in Microsoft Windows® or a printing system-specific means, and acquires a list of print jobs and pieces of attachment information. Based on the acquired job information, the information input UI updates job list information stored in advance in a storage device such as the RAM 202 or HD 205. The process advances to S1514 to update the display of the job list area in Fig. 3 based on the job list information updated in S1513. After that, the process returns to S1501 to repeat the subsequent processing. If the information input UI determines in S1512 that the event is not clicking of the "update" button, the process returns to S1501 to repeat the subsequent processing.

According to the above-described method, even when the printing history management system deletes a job, the job is archived before the deletion timing. The job archive system can archive the job without the influence of deletion processing.

### <Second Embodiment>

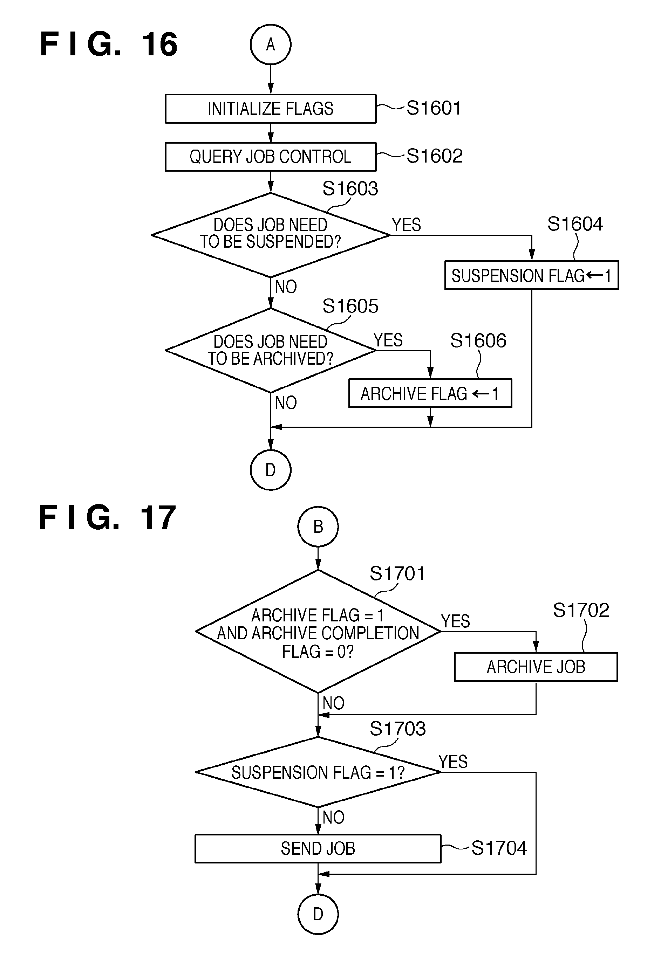

The second embodiment will be explained with reference to Figs. 9, 13, 14, 15, 16, 17, and 18. The first embodiment has described a printing history management system which deletes a job. The second embodiment will examine application of the present invention to a system which stops execution of a job without deleting it when the number of jobs has exceeded the upper limit value of jobs processible for a given user. A description common to the first embodiment will not be repeated, and only a difference will be explained. The second embodiment is different from the first embodiment in the sequences of Figs. 16, 17, and 18. Similar to the first embodiment, main processors (spooler, port monitor, printing apparatus, spooler monitoring module, and archive module) in Figs. 6 to 8 also cope with Figs. 16 to 18.

Fig. 16 is a flowchart exemplifying the basic operation of the port monitor at the start of a job according to the second embodiment. This sequence corresponds to Fig. 10 described in the first embodiment. In S1601, the port monitor initializes flags. These flags are a "suspension flag" for determining whether to suspend a job, an "archive flag" for determining whether to archive a job, and an "archive completion flag" representing whether a job has been archived. The port monitor uses a CPU 200 to ensure an area for each job in the work area of a storage device such as a RAM 202. The port monitor sets and saves an initial value "0" in each flag.

In S1602, the port monitor queries job control. More specifically, the port monitor inquires a job control method of the spooler monitoring module and archive module via an available communication means. In S1603, the port monitor uses the CPU 200 to determine, based on the query result in S1602, whether the job needs to be suspended. If the port monitor determines in S1603 that the job needs to be suspended, the process advances to S1604. The port monitor uses the CPU 200 to set and save "1" in the suspension flag ensured in the storage area of the RAM 202 or the like. After that, the process returns to S901 in Fig. 9 (D). If the port monitor determines in S1603 that the job need not be suspended, the process advances to S1605. The port monitor uses the CPU 200 to determine, based on the query result in S1602, whether the job needs to be archived. If the port monitor determines in S1605 that the job needs to be archived, the process advances to S1606. The port monitor uses the CPU 200 to set and save "1" in the archive flag ensured in the storage area of the RAM 202 or the like. The process then returns to S901 in Fig. 9 (D). If the port monitor determines in S1605 that the job need not be archived, the process returns to S901 in Fig. 9 (D).

Fig. 17 is a flowchart exemplifying the basic operation of the port monitor when sending a job according to the second embodiment. This sequence corresponds to Fig. 11 described in the first embodiment. In S1701, the port monitor determines whether the job needs to be archived and has not been archived. More specifically, the port monitor uses the CPU 200 to search for flags ensured in the work area allocated in the storage area of the RAM 202 or the like. If the archive flag of the job is "1" and the archive completion flag is "0", the port monitor determines that the job needs to be archived and has not been archived. If the port monitor determines in S1701 that the job needs to be archived and has not been archived, the process advances to S1702 to archive the job. More specifically, the port monitor transfers the job to the archive module via an available communication means. The archive module archives the received job by an available method, and saves the archive data in an area ensured in a storage device such as an HD 205. If the port monitor determines in S1701 that the job need not be archived or has been archived, the process advances to S1703 to determine whether to suspend the job without sending it or send the job. More specifically, the port monitor uses the CPU 200 to search for flags ensured in the work area allocated in the storage area of the RAM 202 or the like. If the suspension flag of the job is "1", the port monitor determines to suspend the job without sending it, and the process returns to S901 in Fig. 9 (D). If the port monitor determines in S1703 that the job needs to be sent without suspending it, the process advances to S1704 to send the job to the printing apparatus by an available method. Subsequently, the process returns to S901 in Fig. 9 (D).

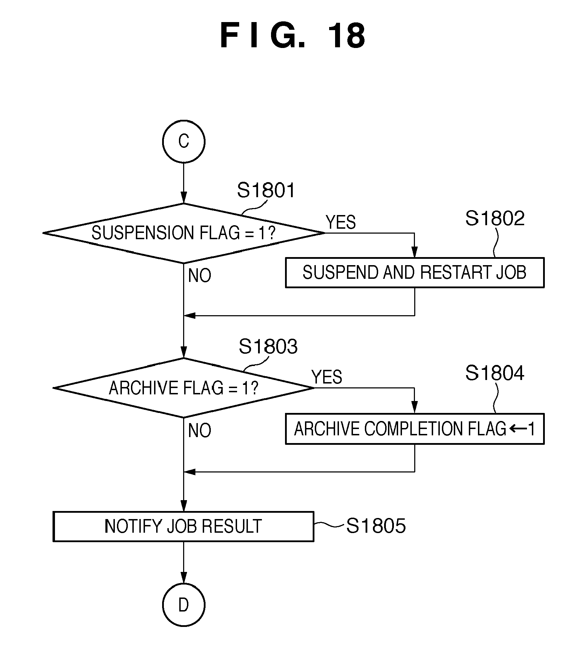

Fig. 18 is a flowchart exemplifying the basic operation of the port monitor at the end of a job according to the second embodiment. This sequence corresponds to Fig. 12 in the first embodiment. In S1801, the port monitor determines whether the job needs to be suspended. More specifically, the port monitor uses the CPU 200 to search for flags ensured in the work area allocated in the storage area of the RAM 202 or the like. If the job suspension flag of the job is "1", the port monitor determines that the job needs to be suspended. If the port monitor determines in S1801 that the job needs to be suspended, the process advances to S1802 to suspend the job. The port monitor requests the spooler system to suspend and restart the job by an available means. This can be achieved by a method of, for example, transferring job handle commands JOB_CONTROL_PAUSE and JOB_CONTROL_RESTART of the job as parameters to a spooler function SetJob() prepared in Microsoft Windows®. After the restart, the process advances to S1803. If the port monitor determines in S1801 that the job need not be suspended, the process advances to S1803. In S1803, the port monitor determines whether the job has been archived. More specifically, the port monitor uses the CPU 200 to search for flags ensured in the work area allocated in the storage area of the RAM 202 or the like. If the archive flag of the job is "1", the port monitor determines that the job has been archived. If the port monitor determines in S1803 that the job has been archived, the process advances to S1804 to set "1" in the archive completion flag. More specifically, the port monitor uses the CPU 200 to set and save "1" in the archive completion flag ensured in the storage area of the RAM 202 or the like. Thereafter, the process advances to S1805. If the port monitor determines in S1803 that the job has not been archived, the process advances to S1805. In S1805, the port monitor notifies the spooler monitoring module of the job result. The process then returns to S901 in Fig. 9 (D).

According to the above-described method, even when suspending printing of a job, the archive system can archive the job at the timing when a suspension control instruction is received. When printing is executed after suspending the job, the job need not be archived again, improving user friendliness. Since no job is archived in printing after resuming the job processing, the system neither generates the load of archiving nor decreases the printing performance.

### <Third Embodiment>

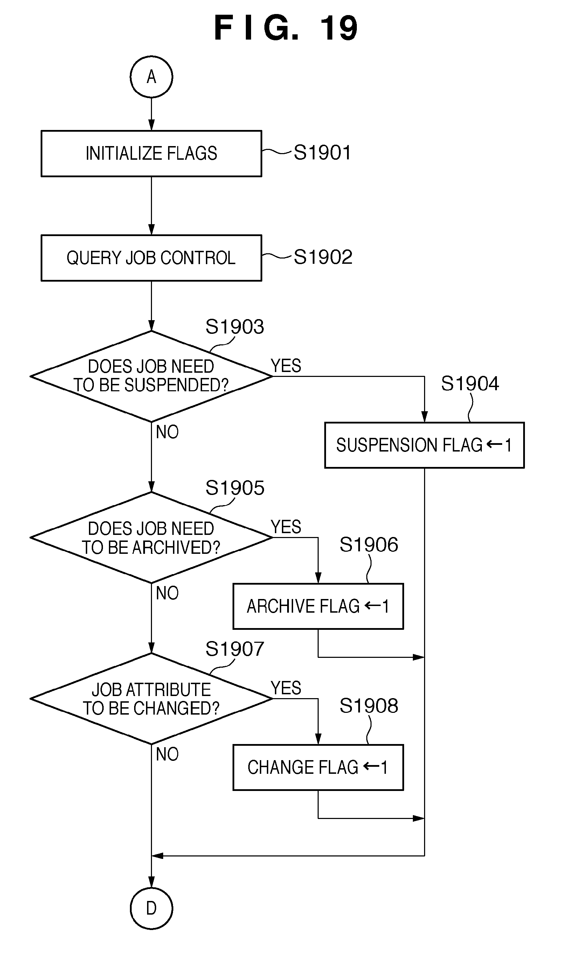

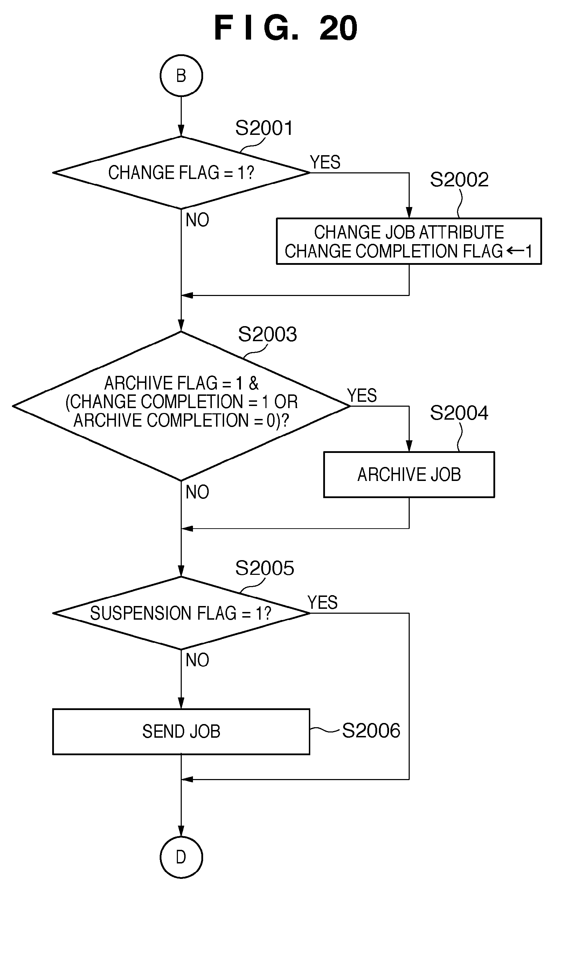

The third embodiment will be explained with reference to Figs. 9, 13, 14, 15, 18, 19, and 20. The second embodiment has described a printing history management system which suspends a job. The third embodiment will examine application of the present invention to a system which changes an attribute, for example, forcibly changes single-sided printing to double-sided printing by correcting job data. A description common to the second embodiment will not be repeated, and only a difference from the second embodiment will be explained. The third embodiment is different from the second embodiment in the sequences of Figs. 19 and 20. Similar to the second embodiment, main processors (spooler, port monitor, printing apparatus, spooler monitoring module, and archive module) in Figs. 6 to 8 also cope with Figs. 19 and 20.

Fig. 19 is a flowchart exemplifying the basic operation of the port monitor at the start of a job according to the third embodiment. In S1901, the port monitor initializes flags. These flags are a "suspension flag" for determining whether to suspend a job, a "change flag" for determining whether to change the attribute of a job, a "change completion flag" representing whether the attribute of a job has been changed, an "archive flag" for determining whether to archive a job, and an "archive completion flag" representing whether a job has been archived. The port monitor uses a CPU 200 to ensure an area for each job in the work area of a storage device such as a RAM 202. The port monitor sets and saves an initial value "0" in each flag. In S1902, the port monitor queries job control. More specifically, the port monitor inquires a job control method of the spooler monitoring module and archive module via an available communication means.

In S1903, the port monitor uses the CPU 200 to determine, based on the query result in S1902, whether the job needs to be suspended. If the port monitor determines in S1903 that the job needs to be suspended, the process advances to S1904. The port monitor uses the CPU 200 to set and save "1" in the suspension flag ensured in the storage area of the RAM 202 or the like. After that, the process returns to S901 in Fig. 9 (D). If the port monitor determines in S1903 that the job need not be suspended, the process advances to S1905. The port monitor uses the CPU 200 to determine, based on the query result in S1902, whether the job needs to be archived. If the port monitor determines in S1905 that the job needs to be archived, the process advances to S1906. The port monitor uses the CPU 200 to set and save "1" in the archive flag ensured in the storage area of the RAM 202 or the like. The process then returns to S901 in Fig. 9 (D). If the port monitor determines in S1905 that the job need not be archived, the process advances to S1907. The port monitor uses the CPU 200 to determine, based on the query result in S1902, whether the attribute of the job needs to be changed. If the port monitor determines in S1907 that the attribute of the job needs to be changed, the process advances to S1908. The port monitor uses the CPU 200 to set and save "1" in the change flag ensured in the storage area of the RAM 202 or the like. Thereafter, the process returns to S901 in Fig. 9 (D). If the port monitor determines in S1907 that the attribute of the job need not be changed, the process returns to S901 in Fig. 9 (D).

Fig. 20 is a flowchart exemplifying the basic operation of the port monitor when sending a job according to the third embodiment. In S2001, the port monitor determines whether the attribute of the job needs to be changed. More specifically, the port monitor uses the CPU 200 to search for flags ensured in the work area allocated in the storage area of the RAM 202 or the like. If the change flag of the job is "1", the port monitor determines that the attribute of the job needs to be changed. If the port monitor determines in S2001 that the attribute of the job needs to be changed, it changes the attribute of the job in S2002. More specifically, the port monitor receives a job change instruction from a spooler monitoring module 407 via an available communication means. Based on the received change instruction, the port monitor changes the attribute of a job transferred from a spooler 403. For example, the port monitor uses the CPU 200 to analyze a job transferred from the spooler 403 or some divided jobs, search for an attribute to be changed, and if necessary, update it. After changing the attribute, the port monitor sets "1" in the change completion flag ensured for the job in the work area allocated in the storage area of the RAM 202 or the like. The process then advances to S2003. If the port monitor determines in S2001 that the attribute of the job need not be changed, the process advances to S2003.

In S2003, the port monitor determines whether the job needs to be archived. More specifically, the port monitor uses the CPU 200 to search for flags ensured in the work area allocated in the storage area of the RAM 202 or the like. If the archive flag of the job is "1", and the change completion flag is "1" or the archive completion flag is "0", the port monitor determines that the job needs to be archived. If the port monitor determines in S2003 that the job needs to be archived, the process advances to S2004 to archive the job. More specifically, the port monitor transfers the job to an archive module 507 via an available communication means. The archive module 507 archives the received job by an available method, and saves the archive data in an area ensured in a storage device such as an HD 205. If the port monitor determines in S2003 that the job need not be archived or has been archived, it determines in S2005 whether to send the job to the printing apparatus or suspend the job without sending it. More specifically, the port monitor uses the CPU 200 to search for flags ensured in the work area allocated in the storage area of the RAM 202 or the like. If the suspension flag of the job is "1", the port monitor determines to suspend the job without sending it. The process then returns to S901 in Fig. 9 (D). If the port monitor determines in S2005 that the job needs to be sent, it sends the job to the printing apparatus by an available method in S2006. After that, the process then returns to S901 in Fig. 9 (D).

According to the above-described method, when the attribute of a job is changed after suspending the job, print data after changing the job attribute can be archived again. A job more accurately reflecting actual printing can be archived.

In the first embodiment, even when the printing history management system deletes a job, the job archive system can archive the job.

In the second embodiment, even when suspending printing of a job, the archive system can archive the job in suspension. When printing is executed after resuming the job, the job need not be archived again, improving user friendliness. Since no job is archived in printing after resuming the job, the system can prevent a decrease in printing performance caused by the load of archiving.

In the third embodiment, when the attribute of a job is changed after suspending the job, print data after changing the job attribute can be archived again. A job with settings of final printing can be archived.

Resultantly, the present invention can provide a system which neither limits the specifications of a printing control apparatus, leak held data, nor decrease the printing speed even if a plurality of print processes are requested of a single printing apparatus.

### Other Embodiments

An embodiment of the present invention provides an information processing apparatus, which is connectable to a printing apparatus, comprising:
a management means configured to manage a status of a job, data of the job, and a control method of the job;
a job control inquiry means configured to receive the control method of the job from said management means before sending the job to the printing apparatus; and
a job control means configured to control, based on the control method of the job received by said job control inquiry means, a timing to archive the data of the job.

A further embodiment provides a method of controlling an information processing apparatus, which is connectable to a printing apparatus, the method comprising:
a management step of causing a management means of the information processing apparatus to manage a status of a job, data of the job, and a control method of the job;
a job control inquiry step of causing a job control inquiry means of the information processing apparatus to receive the control method of the job from the management means before sending the job to the printing apparatus; and
a job control step of causing a job control means of the information processing apparatus to control, based on the control method of the job received in the job control inquiry step, a timing to archive the data of the job.

Furthermore, in a case that the control method of the job received by said job control inquiry means indicates that the job is to be deleted, said job control means archives the data of the job without sending the job to the printing apparatus, and deletes the job after an end of archiving the data of the job.

Furthermore, in a case that the control method of the job received by said job control inquiry means indicates that the job to be suspended, said job control means archives the data of the job without sending the job to the printing apparatus, and suspends execution of the job after an end of saving the data of the job.

Furthermore, in a case that the control method of the job received by said job control inquiry means indicates that an attribute of the job is to be changed, said job control means archives data of the job after the attribute change.

Aspects of the present invention can also be realized by a computer of a system or apparatus (or devices such as a CPU or MPU) that reads out and executes a program recorded on a memory device to perform the functions of the above-described embodiment(s), and by a method, the steps of which are performed by a computer of a system or apparatus by, for example, reading out and executing a program recorded on a memory device to perform the functions of the above-described embodiment(s). For this purpose, the program is provided to the computer for example via a network or from a recording medium of various types serving as the memory device (e.g., computer-readable medium).

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

The following statements form part of the description. The claims follow these statements and are labeled as such.
1. An information processing apparatus (1), which is connectable to a printing apparatus (2), comprising:
   a management means (403, 407) configured to manage a status of a job, data of the job, and a control method of the job;
   a job control inquiry means (404) configured to receive the control method of the job from said management means before sending the job to the printing apparatus (2); and
   a job control means (404) configured to control, based on the control method of the job received by said job control inquiry means, a timing to archive the data of the job.
2. The apparatus according to statement 1, wherein the job control means is configured so that, in a case that the control method of the job received by said job control inquiry means indicates that the job is to be deleted, said job control means archives the data of the job without sending the job to the printing apparatus, and deletes the job after an end of archiving the data of the job.
3. The apparatus according to statement 1 or 2, wherein the job control means is configured so that, in a case that the control method of the job received by said job control inquiry means indicates that the job to be suspended, said job control means archives the data of the job without sending the job to the printing apparatus, and suspends execution of the job after an end of saving the data of the job.
4. The apparatus according to any one of statements 1 to 3, wherein the job control means is configured so that, in a case that the control method of the job received by said job control inquiry means indicates that an attribute of the job is to be changed, said job control means archives data of the job after the attribute change.
5. A method of controlling an information processing apparatus (1), which is connectable to a printing apparatus (2), the method comprising:
   a management step of causing a management means (403, 407) of the information processing apparatus to manage a status of a job, data of the job, and a control method of the job;
   a job control inquiry step of causing a job control inquiry means (404) of the information processing apparatus to receive the control method of the job from the management means before sending the job to the printing apparatus (2); and
   a job control step of causing a job control means (404) of the information processing apparatus to control, based on the control method of the job received in the job control inquiry step, a timing to archive the data of the job.
6. A program that, when executed on an information processing apparatus, causes the information processing apparatus to perform a method according to statement 5.
7. A storage medium storing a program according to statement 6.

## Claims

1. An information processing apparatus (103, 104) comprising:
a spooler (503) for spooling jobs received from an application (401);
a spooler monitor (407);
an archive means (507) for archiving a job; and
a port monitor (404, 504);
the port monitor (404, 504) being configured to:
detect if the spooler starts a job,
in a case that the port monitor detects that the spooler starts a job, request control parameters from the spooler monitor and archive means; and
in a case that a control parameter received from the archive means indicates that the job is to be archived, and a control parameter received from the spooler monitor indicates that another operation is to be performed on the job, cause the archive means to archive the job and cause performance of the other operation.

2. An information processing apparatus (103, 104) according to claim 1, wherein the port monitor (404, 504) is configured to set an archive flag associated with the job based on the control parameter received from the archive means (507), which flag is settable by the port monitor in dependence upon whether the job needs to be archived.

3. An information processing apparatus according to claim 1 or claim 2, wherein the port monitor (404, 504) is configured to determine whether or not the job has been archived (S1101) and to set an archive-complete flag associated with the job based on whether or not the job has been archived.

4. An information processing apparatus (103, 104) according to any preceding claim, wherein the port monitor (404, 504) is configured to set a flag associated with the job based on the control parameter received from the spooler monitor (407), which flag is settable by the port monitor in dependence upon whether the another operation needs to be performed on the job.

5. The apparatus according to any preceding claim, wherein in a case that the another operation is deletion of the job, said port monitor (404, 504) is configured to cause the archive means (507) to archive the data of the job, to not send the job to the printing apparatus, and to cause deletion of the job after an end of archiving the data of the job.

6. The apparatus according to any preceding claim, wherein in case that the another operation is suspension of the job, said port monitor (404,504) is configured to cause the archive means (507) to archive the data of the job, to not send the job to the printing apparatus, and to cause suspension of execution of the job after an end of saving the data of the job.

7. The apparatus according to any preceding claim, in a case that the another operation is changing an attribute of the job, said port monitor (404, 504) is configured to cause the archive means to archive data of the job after the attribute change.

8. A method of an information processing apparatus (103, 104), the information processing apparatus comprising:
a spooler (503) for spooling jobs received from an application (401);
a spooler monitor (407);
an archive means (507); and
a port monitor (404, 504),
the method comprising:
detecting at the port monitor if the spooler starts a job,
in a case that the port monitor detects that the spooler starts a job, requesting control parameters from the spooler monitor and archive means; and
in a case that a control parameter received from the archive means indicates that the job is to be archived, and a control parameter received from the spooler monitor
indicates that another operation is to be performed on the job, causing the archive means to archive the job and
causing performance of the other operation.

9. A program that, when executed on an information processing apparatus, causes the information processing apparatus to perform a method according to claim 8.

10. A storage medium storing a program according to claim 9.
